# EUROPEAN PATENT SPECIFICATION

(11) **EP 1 459 494 B1**
(45) Date of publication and mention of the grant of the patent: **24.10.2012**
(21) Application number: 02805275.1
(22) Date of filing: 17.12.2002
(51) Int. Cl.: H04L 29/08

(54) **METHOD, SYSTEM AND AGENT FOR TRANSMITTING INFORMATION OVER A COMMUNICATION NETWORK**
VERFAHREN, SYSTEM UND AGENT ZUM SENDEN VON INFORMATIONEN ÜBER EIN KOMMUNIKATIONSNETZ
PROCEDE, SYSTEME ET AGENT DE TRANSMISSION D'INFORMATIONS SUR UN RESEAU DE COMMUNICATION

(30) Priority: 20.12.2001 NL 1019618
(43) Date of publication of application: 22.09.2004
(73) Proprietor: Koninklijke KPN N.V., 2516 CK The Hague (NL)
(72) Inventor: AASMAN, Jannes, NL-2334 AV Leiden (NL); PIETERSE, Rob, NL-2111 ZL Aerdenhout (NL)
(74) Representative: Wuyts, Koenraad Maria
(86) International application number: PCT/EP2002/011056
(87) International publication number: WO 2003/055168

(56) References cited:
- US-A- 5 974 447
- US-A- 6 044 403

## Description

### BACKGROUND

The invention relates to a method for transmitting information over a communication network. In particular, the invention relates to a method for transmitting information between a server and at least one client, whereby the server has agent functionality. The invention further relates to a system and agent for exchanging information over a communication network.

Communication networks can roughly speaking be divided into fixed networks and wireless networks. The functionality of such communication networks is definable in terms of client-server relations. A communication network in this context is understood to be any network that consists of at least one server and at least one client over which information is transmittable. Note with regard to the terms client and server that, in this context, there is only a functional difference. A device can, if it allows, perform both server and client functions in a communication network. Devices can accommodate several clients. A client retrieves information from a server through a request. The server waits for requests from clients and executes the instruction of the request. Such an instruction may consist of asking for information. An instruction may also concern the manipulation of information, such as modification of a database or schedule, or the retrieval of messages (such as email). Information in the present context includes data, whereby the difference may consist of the meaning in a certain context. Information has a meaning for the recipient, while data often requires a certain conversion or transformation before the data obtains a meaning within the recipient's context. This information may be located at the server in question, in a server cache or on other servers. In the latter case, the server retrieves the information from the other server. The servers are usually interconnected by always-on connections with a large bandwidth. The server sends the requested information to the client, where the information is deliverable in a form useful for the user. In a typical constellation, several clients will be connected to a server. The client may be a browser on a device like a mobile telephone, PDA or personal computer, for example. A problem with such constellations is the circumstance that connections between the server and client have a limited bandwidth. Another problem is that the client is not always "connected" (online) to the server but must set up the connection. As a result of this situation, the information the client requests from the server is delivered to the client with a significant delay. This delay ("latency") obviously becomes longer according as the quantity of requested information increases, the bandwidth on the link is smaller or the load on the server is greater.

A method is known from the applicant's non-prepublished patent application WO-A-01 75666 ("Method and system for retrieving data of a data network") for getting information to a user via a network by providing the user with an adjustable means of navigation by means of which information pages retrieved by the user can be analyzed, whereby the retrieved pages are stored in a personal client proxy and associated client cache, with the information pages in the cache being updated by fetching information pages via that network. Through the application of this method and system, the user has the impression that in many cases an up-to-date information page from the server is being displayed to him quickly (i.e. without a significant latency) when he requests the information. In reality, however, the page is fetched from the personal client proxy. The user is less aware of the problems concerning limited bandwidth in the communication network between server and client, the server capacity and the circumstance that numerous clients are not continuously online. However, all information must still be sent to the cache/personal client proxy, where the information relevant to the user is retained through filtering. This is disadvantageous for clients in portable equipment, for example, where the available memory space (cache) is limited.

US 5,974,447 discloses a communication system for coupling a selective call transceiver to a widely distributed information source, which comprises a server coupled to the widely distributed information source. The server contains agents for retrieving information customized for a given selective call transceiver. The system further includes a paging terminal coupled to the server for allowing the selective call transceiver to request information from the server. The system also includes a transmitter for transmitting the predetermined information retrieved from the widely distributed information source to the selective call transceiver.

US 6,044,403 discloses an architecture capable of utilizing the existing twisted pair interface between the customer services equipment and the local office to provide an array of services to customers. Using an intelligent services director (ISD) at the customer services equipment and a facilities management platform (FMP) at the local office, services such as simultaneous, multiple calls (voice analog or digital), facsimile, Internet traffic and other data can be transmitted over the existing single twisted pair using xDSL transmission schemes. Services such as the implementation of Internet connectivity, videophone, utility metering, broadcasting, multicasting, bill viewing, information pushing in response to a user profile, directory look-up can be implemented via a network server platform via this architecture. A network server platform for hosting a plurality of services comprises, for example, a memory for storing a user profile, the user profile containing interests of a user, and for storing information related to their interests and a controller for controlling the collection of information from information servers and for pushing the collected information to the user in accordance with their defined priority.

### SUMMARY

According to the invention a method according to independent claim 1, a system according to independent claim 19 and a communication network according to independent claim 28 are provided. Favorable embodiments are defined in the dependent claims.

The method, system and agent according to the invention offer a new and inventive solution to the matters discussed above and other problems associated with the prior art. According to the method and system, the server side of a communication network has an agent that keeps information in a cache of the server up to date. At a suitable time, relevant information can be sent to the client and/or device of the user. The relevance of the information to the user is determined preferably by user profiles entered by or associated with the user. These profiles may differ according to the client and/or according to the user's device. An advantage of this personalization possibility is that the user is able to determine which information he wishes to receive and/or how he wishes the information to be presented on his device connected to the communication network. The user can, for example, let the method of presentation depend upon the display capabilities of his device. Additionally, this method of applying usage profiles provides an important marketing information source for the manager of the server on which the agent runs. The profiles can be set in various ways. The user can create or modify the profile settings by means of his mobile device; it is also possible for the user to create or modify the settings by means of a network other than the communication network referred to above. This could be, for example, a desktop personal computer that by means of a fixed line establishes contact with the server, where the user creates or modifies via his PC the user profile stored in a database on the server for his other devices (and possibly also for the PC itself).

The agent can perform various roles and possess properties in a variety of variants according to the invention. In a preferred embodiment, the agent is capable of serving several clients, both in series and in parallel. The number of clients the agent serves can be considerable (for example, many hundreds/thousands on a single server). It is advantageous to allow the agent to combine the usage profiles of the often large numbers of users that correspond with the various clients. The agent ensures that the information is always kept up-to-date.

In one embodiment, the agent can use usage profiles defined by or associated with the user to select information the user finds relevant. As a filter, the user can for example compose a predefined list of favorites ("bookmarks"). The usable filters are described in earlier non-prepublished patent applications of the applicant, WO-A-01 75666 ("Method and system for retrieving data of a data network") and WO-A-01 82130 ("Method and system for creating a button type bookmark") and according to an embodiment of the invention will be used mutatis mutandis in or near the server. In another embodiment of a filter, the agent filters using the user profile in a page to select the relevant information for a certain client and sends that information to the client that satisfies that profile, possibly depending upon the type of device the user uses. The rest of the page is preferably not sent, so as to make a smaller claim on the limited bandwidth available in at least part of the communication network. The filtering of pages and the filtering in pages are combinable.

The agent sends the information to the client at a suitable time; this time is preferably a time when the load on the communication network between server and client is low.

The agent uses parameters to determine the suitable time for sending relevant information from server to client.

In a preferred embodiment, a parameter is the load on the communication network. If the load on the communication network is high, only information that ages relatively quickly will be sent, such as stock market prices, road traffic information or the latest news. If the load on the communication network is lower, information that changes less frequently will be sent, such as an electronic newspaper or sports results. Another example of a parameter for sending relevant information from server to client is the time when the user generally retrieves certain information. If the user seldom retrieves information during the night, the information in the cache of the user's device will be refreshed at these times less frequently or not at all. In an embodiment, it is possible by means of the agent (10) to determine, on the basis of information about the user's whereabouts, which parts of the current information are relevant to the user.

In a preferred embodiment, the agent is capable of learning the user's behavioral pattern. The agent is capable, for example, of learning the time at which the user retrieves certain information in a certain form and/or uses a certain device. To allow the agent to learn the user's behavioral pattern, it is advantageous if the device that the user uses informs the agent via the client which information the user retrieves from the cache of a certain device at a certain time. The advantage of this learning functionality of the agent is that the agent becomes increasingly better geared to the user's information retrieval behavior, which means the user increasingly often immediately gets the information he requires.

In a preferred embodiment, the agent waits until the last moment before bundling and sending to a certain client the information relevant to a user, possibly using a suitable form of compression. An advantage of this method is that, in practice, a considerable degree of similarity exists between the information that the various users retrieve. This makes it efficient to bundle and compress the information per user, per client and/or per device only at the moment the information will be sent. When the times of sending the information to clients are close to each other, it is advantageous to use multicast techniques for such information. This further reduces the load on the server and certain network parts. Until such time as the information is sent, it is possible to suffice with keeping the information up to date. This method is further advantageous for maintaining control over the server memory space necessary to store the information for the typically large numbers of clients to be served.

### System

The system is arranged such that it can execute one on more aspects of the method in a new and inventive way. In various preferred embodiments, the system is arranged such that variants of the method are executable.

The device of which the client forms part is preferably of the "always on" type or has an automatic answering mode. An example of a device of the "always on" type is a GPRS mobile phone. The advantage of the device being "always on" is that the agent can actually send the relevant information to the device at a suitable time and the device can store the information in its cache.

In one embodiment of the invention, the agent is not located in the server, but somewhere in a network that has contact with the server with which contact is sought. The role of the agent is particularly important for, although not confined to, communication networks that at least in part have only limited bandwidth, such as a wireless communication network.

Note that the various preferred embodiments or aspects thereof are combinable according to the invention.

### BRIEF DESCRIPTION OF THE DRAWINGS

Fig. 1 shows a diagrammatic representation of a system for sending information over a communication network using an agent.
Fig. 2 shows an example of an embodiment of the functioning of the agent in a situation with several clients and usage profiles and several networks.

### DESCRIPTION

Based on an example, a few preferred embodiments of the method, the system and the agent functionality according to the invention will be described below. It will be clear to the person skilled in the art that alternative or equivalent embodiments of the invention are conceivable and practicable, without departing from the fundamentals of the invention; the fundamentals of the invention will be limited only by the claims as ultimately granted.

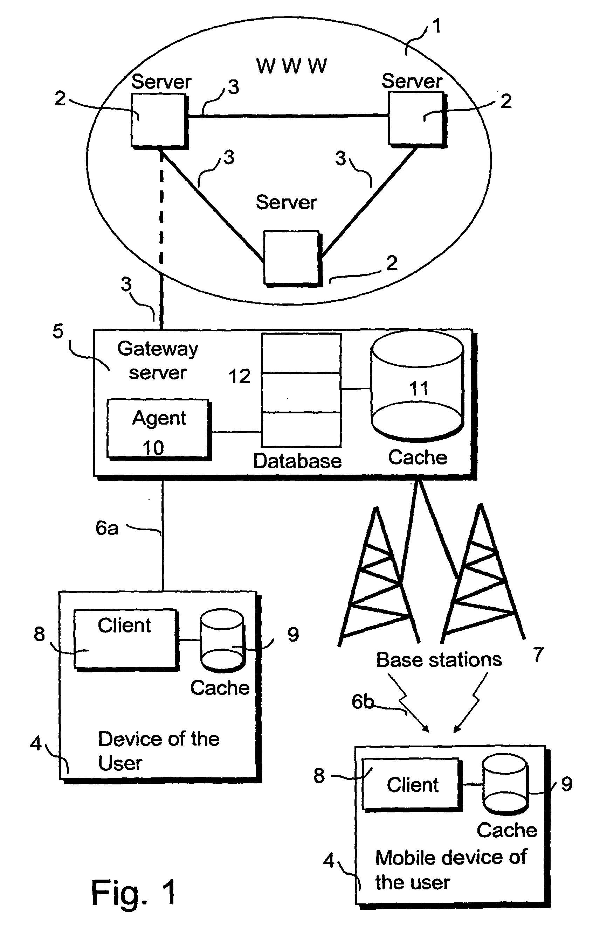

Figure 1 presents a diagrammatic representation of a communication network over which information or data can be sent. The shown communication network includes both a fixed communication network (3, 6a) and a wireless network (6b). In the embodiment, there is an architecture (1), for example the World Wide Web (WWW). The architecture (1) includes a number of servers (2) connected by means of communication lines (3). The servers (2) possess a certain memory capacity (not shown) for storing information that users/clients can retrieve by means of a request. If the information requested by the user is not present on the server concerned, the server will seek contact with a server on which the requested information is known to be present. The communication network (3) between servers (2) preferably has a large bandwidth (in the order of Mbits). Information located on one or more of the servers (2) is accessible to users in possession of a device or terminal (4) via a gateway server (5). Such a gateway server (5) can also store information itself in the cache (11). Examples of devices or terminals (4) are personal computers, mobile phones or other handheld devices like PDAs. These devices contain one or more means, known to the average person skilled in the art, for more or less optimum operation of the device (4) of the user. These means (not shown) concern among other things an input unit, a display unit and similar.

Part 6a, 6b of the communication network between this server (5) or the base station (7) and the device of the user (4) in practice often has a smaller bandwidth than, for example, the bandwidth of the connections (3) between the servers (2) mutually. This part 6a, 6b of the communication network is formed, for example, by PSTN, ISDN, ADSL and GSM connections.

The user's devices have at least a client (8) and a cache (9). A client (8) is a software module that enables the user's device (4) to communicate with one or more servers (2, 5) in order to retrieve information. In the shown situation, the user obtains access to the servers via the gateway server (5). This is achievable by recording in the user's device the IP address of the gateway server. In the present case, the cache (9) of the device means a memory module on which the requested information is storable for a shorter or longer period of time and is quickly retrievable whenever the user wishes. At present, the memory space for such caches (9), particularly for mobile devices (4), is not very large and memory sticks of, for example, 32 MB are used. In such a situation, it is particularly advantageous if the memory module is, with a great degree of probability, filled with information the user actually wants. This desired situation, whereby the cache (9) is filled with information required by the user, is achieved by giving the gateway server (5) the agent functionality (10) according to the invention.

According to invention, the agent functionality (10) is created at the server (5) that is connected to a part (3) of the communication network that possesses a large bandwidth. The user's device (4) is preferably of the "always on" type (for example, a mobile device (4) that communicates via a GPRS network) or, in an alternative case, possesses an automatic answer mode. This property enables the agent (10) at the server (5) to send relevant information to the user's device (4) at a suitable time determined by the agent (10), whereby the relevant information is received by the device (4) and is storable in the cache (9).

The agent (10) includes a software module that is preferably located at the server (5) and arranged such that it can optimally serve the user. Such an agent (10) is preferably capable of serving a large number of clients simultaneously. For this purpose, the agent maintains a cache (11) with information that is kept up-to-date all the time and that is relevant to the clients (8) and/or devices (4) of the users associated with the agent (10). This is achievable by combining the usage profiles of the various users and, depending on this combination, retrieving the information from servers (2) and storing it in the cache (11) associated with the agent (10). For this purpose, it is unnecessary for this cache and the agent (10) to be in each other's physical proximity. The only important matter is that the gateway server (5) possesses agent functionality. The usage profiles and/or device profiles are stored in a database (12) that is, for example, located at the gateway server (5). The usage profiles and/or device profiles in the database (12) can be created and kept up-to-date via the devices (4) of the users. It is also possible for the settings not to be entered via the network part 6a, 6b, but for contact to be sought with the profiles database (12) via another network. In this way, it is possible, for example, for the user to use a personal computer and ISDN line to create the profiles for his mobile device (4) that communicates with the gateway server (5). The new or modified settings of the profiles subsequently determine how the agent deals with sending information to the user's mobile device (4).

To serve the user optimally, the agent (10) can possess one or more of the functionalities described below.

In a preferred embodiment, the agent (10) executes on cache (11) a filter operation related to the client (8) and/or device (4) and/or user, with up-to-date information enabling determination of which information is relevant to the user and/or which settings of the device (4) must be offered on presentation of the information.

A predefined list of favorites ("bookmarks") can be used to select the up-to-date information from information relevant to the user. The predefined list of favorites is stored in the database (12). The information may concern, for example, business or personal interests. The working and method of defining such filters on the client side have already been defined in the aforementioned non-prepublished applications and can be applied mutatis mutandis at or by the agent (10). Besides determining for example the relevant web pages via the predefined bookmarks, the agent (10) can send only parts of these pages that are relevant to the user. The other parts of the page will, so to speak, be "stripped" from the web page to leave in place the relevant information, such relevant information subsequently being sent at a suitable time to the client (8). This is particularly advantageous if the connection between the server containing the information and the user's device (4) concerns a network part (6a, 6b) with limited bandwidth. An extra advantage is achievable in this situation by applying state-of-the-art compression techniques to the relevant information before sending it.

In a preferred embodiment, the agent (10) possesses the functionality to use certain parameters to determine which information must be sent when to which user device (4) and/or client (8). An example of a parameter the agent (10) can use to determine when the information must be sent to the user's device (4) is the network load on network part 6a, 6b. At such a suitable time, the information will be pushed to the client (8) of the device (4). To avoid overloading the communication network, it is advantageous at time of high load to send only frequently changing information, while less frequently changing information can be sent to the user's device (4) at times when there is a lower load on the network.

In one embodiment, a parameter used is the time at which the user of the device (4) normally retrieves his information. If the user of the device (4) seldom retrieves information at night, for example, the agent (10) will need to refresh the information in the cache (9) of the user's device (4) less regularly during the night. If the user regularly consults stock market prices in the afternoon, however, and in the evening retrieves certain sites concerning a hobby, the agent will ensure that this information is present in the cache (9) of the device (4) at those times and is regularly refreshed. For the purpose of this functionality, whereby the information is sent to the cache (9) of the user's device (4) depending on the user's behavioral pattern, the agent (10) possesses an embodiment of a learning function. To this end, the user's device (4) is preferably capable of communicating with the server (5), whereby the client (8) informs the agent (10) of when the user consults the information and which device (4) is associated with the client (8). The agent saves this information in the database (12) and by means of state-of-the-art learning methods is capable of learning the behavioral pattern of the user regarding the retrieval of information. This could include, for example, a statistical analysis of the data that the user's device (4) sends to the agent (10). Summarizing the learning by the agent happens through an interactive process between the client (8) and the agent (10).

The information relevant to a specific client (8) is preferably bundled from the up-to-date information at the latest possible moment and sent over the network part (6) to the client. This promotes efficient working of the system in general and the agent (10) in particular. The user of a device (4) can obviously also use that same device to "just" retrieve information at the gateway server (5) or the servers (2), without the agent (10) being involved in the first instance. If the user retrieves for the first time a page that is not known to the agent, this information will be fetched from a different server (2) and forwarded to the client (8). In this situation, the agent signals only the retrieval of the page. If the user subsequently consults this page more frequently, the agent will, via the learning mechanism, keep the page available for the user at the determined times. By now it will be clear that the user is capable of making changes or additions to the usage profiles and is capable of including the page in question in such a profile.

In an embodiment, the agent (10) is capable of determining, based on information about the user's whereabouts, which part of the up-to-date information is relevant to the user. The user can be sent, for example, information about a traffic jam on a certain route in the motorway network only if the user with his device (4) is located in the vicinity of that route. Similarly, the agent (10) can send from the up-to-date information only relevant information about special offers of certain shops in the vicinity of the user with his device. It will be clear that the learning function of the agent (10) can also concern places the user visits or which the user indicates that he visits. A combination of sending the relevant information at certain times and sending this information when the user is or will be located at a certain place is another of various possibilities.

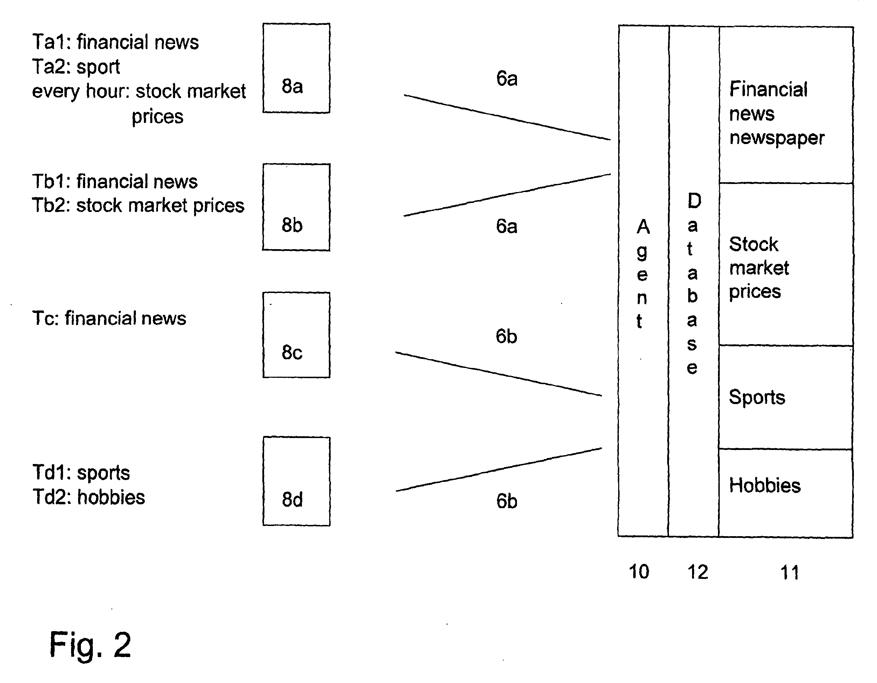

Figure 2 shows an example of an embodiment of the application of the agent (10) in a more complex situation with several clients 8a...d and network parts (6a and 6b). Although not elaborated any further here, the clients (8a...d) are contained in various devices (4) (for example 8a in a PDA, 8b and 8c in a mobile phone and 8d in a personal computer). The agent can fetch from the database (12) data regarding the way the relevant information for the user must be presented on the various devices of the user(s). Additionally, it is also possible for various clients (8) to be associated with the various devices of one and the same user and for the agent (10) to know (for example through the learning function) when this user uses a particular device and which information he generally consults on it.

Figure 2 shows the situation where a usage profile is associated with each client (8a...d) in the way shown for the various clients (8a...d) in the figure. In the case of client 8a, it is known, for example because agent (10) possesses the aforementioned learning function or because the user has entered a predefined usage profile, that at time ta1 the part of the information page of a newspaper that contains financial information must be available at the client (8a). The rest of the information page of the newspaper will not be sent to client (8a). Time ta1 is, for example, 07:30 hrs. It is also known that the client (8a) must be in possession of the sports information at time ta2. Ta2 is, for example, 22:00 hrs. Further, the latest stock market prices must be available every hour at client (8a). For the usage profile of client (8a), the agent (10) keeps a cache (11) that contains the latest information about the financial section of the newspaper in question, sports information and stock market prices. In the database (12) it is known which usage profile belongs to the client (8a) and over what type of network part (6a) the client communicates with the server (5). Clients 8a and 8c have a similar profile; however, they expect this information at different times (Tb1, Tb2 and Tc, respectively). Because of the similarity of the profiles, it is sufficient for the agent (10) to combine the usage profiles and not to bundle the relevant information for clients 8a...c for a specific client until such time as the information must be sent over the network part 6a or 6b. Client (8d) has a deviating usage profile. In this situation, the agent (10) maintains for this client (8d) the latest information about sports and hobbies and sends it to the client, depending on the network load on network part 6 b and/or the desired moment Td. Td is, for example, 16:00 hrs on Saturday afternoon. The agent (10) uses different parameters for the corresponding sports information for transmission to the client (8a). For the client (8a) the parameters in question concern the network load of network part 6a and the desired moment Ta2.

## Claims

1. Method for sending information over a communication network (6a,6b) comprising at least one server (5) and a plurality of clients (8a-8d), the server (5) comprising an agent functionality (10), the method comprising the following steps:
- retrieving by the agent (10) from at least one further server (2) up-to-date information, which is relevant to the plurality of clients (8a-8d), by combining the usage profiles of the plurality of clients (8a-8d), the usage profile of a client indicating which information is relevant to a user of the client;
- storing the up-to-date information in a cache(11);
- determining, with the help of the agent (10), of which of the up-to-date information is relevant to a client from the plurality of clients (8a-8d) based on the usage profile of the client;
- sending by the agent (10) to the client of the relevant information over the communication network (6a,6b)at an at least suitable time determined by the agent (10).

2. Method according to claim 1 in which the relevant information consists of at least an information page and/or parts of the information page defined by the usage profile.

3. Method according to claim 1 in which the usage profile also contains data about a device (4) that incorporates the client, and the agent (10), when sending relevant information, sends such relevant information to the client of the device (4) in a way appropriate to the device (4).

4. Method according to claims 1 - 3 in which the usage profile is generated via a device (4) that contains the client.

5. Method according, to claim 4 in which the usage profile is created, modified and/or added to via a device other than the device (4) that contains the client and/or via another network by means of which contact can be established with the agent (10).

6. Method according to any of the preceding claims in which the relevant information is compressed before being sent over the communication network (6a,6b).

7. Method according to claim 6 in which the agent (10) determines whether the relevant information will be sent to the clients (8a-8d) through application of multicast techniques.

8. Method according to any of the preceding claims, in which the agent (10) uses at least one parameter to determine which action must be executed.

9. Method according to claim 8 in which the parameter indicates the load on at least one part of the communication network (6a,6b) and the agent (10) determines, based on the parameter, a suitable time for sending the relevant information.

10. Method according to claim 9 in which the agent (10) indicates which information will be sent, given a certain load on the communication network (6a,6b).

11. Method according to claim 10 in which in the case of a high load on the communication network (6a,6b), only fast-ageing information will be sent, and in the case of a low load on the communication network also information that ages more slowly will be sent.

12. Method according to claim 8 in which the parameter concerns a time at which the client usually retrieves relevant information and the agent (10) determines, based on this parameter, the suitable time for sending the relevant information.

13. Method according to claim 12 in which the agent (10) indicates which information will be sent to the client at which usual time.

14. Method according to claim 8 in which the parameter concerns a place where the relevant information can be important to the user and the agent (10) determines, based on this parameter, the suitable time for sending the relevant information.

15. Method according to any of the claims 8 - 14, in which the agent (10), when sending the information over the communication network (6a,6b), also makes allowance for the capabilities of the device (4) of the user of the client concerned.

16. Method according to any of the preceding claims, in which the agent (10) learns the behavioral pattern of the user.

17. Method according to claim 16 in which the learning of the user's behavioral pattern occurs because the client communicates the user's behavior to the agent (10).

18. Method according to any of the preceding claims in which the agent (10) does not bundle the relevant information for the client until the relevant information is sent to the client.

19. System for sending information over a communication network (6a,6b) comprising at least:
- a server (5) equipped with a server cache (11);
- a plurality of clients (8a-8d):
- an agent functionality (10) at the server (5) that is arranged to
- retrieving from at least one further server (2) up-to-date information, which is relevant to the plurality of clients (a-8d), by combining the usage profiles of the plurality of clients, the usage profile of a client indicating which information is relevant to a user of the client;
- storing the up-to-date information in a cache (11);
- determining of which of the up-to-date information is relevant to a client from the plurality of clients (8a-8d) based on the usage profile of the client;
- sending to the client of the up-to-date information determined to be relevant for the client over the communication network (6a,6b)at an at least suitable time determined by the agent (10).

20. System according to claim 19 in which the communication network (6a,6b) includes a first network part with a limited bandwidth and a second network part with a larger bandwidth, in which the agent (10) is located at the server (5) that interconnects the first network part and the second network part and the client is capable of connection to the first network part.

21. System according to claim 20 in which the first network part is a wireless communication network.

22. System according to any of the claims 19 - 21 in which the agent (10) is arranged to have access to a database (12) that can contain usage profiles regarding relevant information indicated by the user of the device (4) and/or information associated with the user and/or data about the device (4) that contains the client.

23. System according to claim 22 in which the database that contains the usage profiles and/or data of the device that contains the client is arranged in such a way that the profiles and/or data in the database can be created, modified and/or added to by means of a further device and/or via a further communication network.

24. System according to any of the claims 19 - 23 in which the agent (10) contains a learning module controlled by data supplied by the client.

25. System according to any of the claims 19 - 24 in which the client is included in a device of the user that is of the "always on" type, or has an automatic answering mode.

26. Computer program comprising code means for, when the computer program is running on a server, executing the steps of the method according to any of the claims 1 - 18.

27. Data carrier comprising data, in which at least one part of the data represents the computer program according to claim 26.

28. Communication network (6a,6b) comprising at least one server (5) and a plurality of clients in which at the server (5) there is agent functionality (10) arranged for executing at least the steps of:
- retrieving from at least one further server (2) up-to-date information, which is relevant to the plurality of clients (8a-8d), by combining the usage profiles of the plurality of clients (8a-8d), the usage profile of a client indicating which information is relevant to a user of the client;
- storing the up-to-date information in a cache (11);
- determining of which of the up-to-date information is relevant to a client from the plurality of clients (8a-8d) based on the usage profile of the client;
- sending to the client of the up-to-date information determined to be relevant for the client, herein after referred to as the relevant information, over the communication network (6a,6b) at an at least suitable time determined by the agent (10).

29. Communication network according to claim 28 in which the communication network (6a,6b) comprises a first network part with a limited bandwidth and a second network part with a larger bandwidth in which the agent (10) is located at the server (5) that interconnects the first network part and the second network part and the client is capable of connection to the first network part.

30. Communication network (6a,6b) according to claim 29 in which the first network part comprises a wireless communication network.

## Patentansprüche

1. Verfahren zum Senden von Informationen über ein Kommunikationsnetz (6a, 6b), das mindestens einen Server (5) und mehrere Clients (8a-8d) umfasst, wobei der Server (5) eine Agentenfunktionalität (10) umfasst, wobei das Verfahren die folgenden Schritte umfasst:
- Abrufen von aktuellen Informationen von mindestens einem weiteren Server (2) die für die mehreren Clients (8a-8d) relevant sind, durch den Agenten (10), durch Kombinieren der Verwendungsprofile der mehreren Clients (8a-8d), wobei das Verwendungsprofil eines Clients angibt, welche Informationen für einen Benutzer des Clients relevant sind;
- Speichern der aktuellen Informationen in einem Cache (11);
- Feststellen welche der aktuellen Informationen für einen Client von den mehreren Clients (8a-8d) relevant sind, auf der Basis des Verwendungsprofils des Clients mit Hilfe des Agenten (10);
- Senden der relevanten Informationen über das Kommunikationsnetz (6a, 6b) zum Client durch den Agenten (10) zu einem zumindest geeigneten Zeitpunkt, der durch den Agenten (10) bestimmt wird.

2. Verfahren nach Anspruch 1, wobei die relevanten Informationen aus mindestens einer Informationsseite und/oder Teilen der Informationsseite bestehen, die durch das Verwendungsprofil definiert ist.

3. Verfahren nach Anspruch 1, wobei das Verwendungsprofil auch Daten über eine Vorrichtung (4) enthält, die den Client beinhaltet, und der Agent (10), wenn er relevante Informationen sendet, solche relevanten Informationen zum Client der Vorrichtung (4) in einer für die Vorrichtung (4) geeigneten Weise sendet.

4. Verwendung nach den Ansprüchen 1-3, wobei das Verwendungsprofil über eine Vorrichtung (4) erzeugt wird, die den Client enthält.

5. Verfahren nach Anspruch 4, wobei das Verwendungsprofil über eine andere Vorrichtung als die Vorrichtung (4), die den Client enthält, und/oder über ein anderes Netz, mittels dessen ein Kontakt mit dem Agenten (10) hergestellt werden kann, erzeugt, modifiziert und/oder hinzugefügt wird.

6. Verfahren nach einem der vorangehenden Ansprüche, wobei die relevanten Informationen komprimiert werden, bevor sie über das Kommunikationsnetz (6a, 6b) gesendet werden.

7. Verfahren nach Anspruch 6, wobei der Agent (10) feststellt, ob die relevanten Informationen zu den Clients (8a-8d) durch Anwendung von Multicast-Techniken gesendet werden.

8. Verfahren nach einem der vorangehenden Ansprüche, wobei der Agent (10) mindestens einen Parameter verwendet, um festzustellen, welche Handlung ausgeführt werden muss.

9. Verfahren nach Anspruch 8, wobei der Parameter die Last auf mindestens einem Teil des Kommunikationsnetzes (6a, 6b) angibt und der Agent (10) auf der Basis des Parameters einen geeigneten Zeitpunkt zum Senden der relevanten Informationen bestimmt.

10. Verfahren nach Anspruch 9, wobei der Agent (10) in Anbetracht einer bestimmten Last auf dem Kommunikationsnetz (6a, 6b) angibt, welche Informationen gesendet werden.

11. Verfahren nach Anspruch 10, wobei im Fall einer hohen Last auf dem Kommunikationsnetz (6a, 6b) nur schnell alternde Informationen gesendet werden, und im Fall einer niedrigen Last auf dem Kommunikationsnetz auch Informationen, die langsamer altern, gesendet werden.

12. Verfahren nach Anspruch 8, wobei der Parameter einen Zeitpunkt betrifft, zu dem der Client gewöhnlich relevante Informationen abruft, und der Agent (10) auf der Basis dieses Parameters den geeigneten Zeitpunkt zum Senden der relevanten Informationen bestimmt.

13. Verfahren nach Anspruch 12, wobei der Agent (10) angibt, welche Informationen zum Client zu welcher gewöhnlichen Zeit gesendet werden.

14. Verfahren nach Anspruch 8, wobei der Parameter eine Stelle betrifft, an der die relevanten Informationen für den Benutzer wichtig sein können, und der Agent (10) auf der Basis dieses Parameters den geeigneten Zeitpunkt zum Senden der relevanten Informationen bestimmt.

15. Verfahren nach einem der Ansprüche 8 - 14, wobei der Agent (10), wenn er die Informationen über das Kommunikationsnetz (6a, 6b) sendet, auch die Fähigkeiten der Vorrichtung (4) des Benutzers des betreffenden Clients berücksichtigt.

16. Verfahren nach einem der vorangehenden Ansprüche, wobei der Agent (10) das Verhaltensmuster des Benutzers lernt.

17. Verfahren nach Anspruch 16, wobei das Lernen des Verhaltensmusters des Benutzers stattfindet, da der Client das Verhalten des Benutzers an den Agenten (10) übermittelt.

18. Verfahren nach einem der vorangehenden Ansprüche, wobei der Agent (10) die relevanten Informationen für den Client nicht bündelt, bis die relevanten Informationen zum Client gesendet werden.

19. System zum Senden von Informationen über ein Kommunikationsnetz (6a, 6b), das mindestens Folgendes umfasst:
- einen Server (5), der mit einem Server-Cache (11) ausgestattet ist;
- mehrere Clients (8a-8d);
- eine Agentenfunktionalität (10) am Server (5), die beschaffen ist zum
- Abrufen von aktuellen Informationen von mindestens einem weiteren Server (2), die für die mehreren Clients (8a-8d) relevant sind, durch Kombinieren der Verwendungsprofile der mehreren Clients, wobei das Verwendungsprofil eines Clients angibt, welche Informationen für einen Benutzer des Clients relevant sind;
- Speichern der aktuellen Informationen in einem Cache (11);
- Bestimmen, welche der aktuellen Informationen für einen Client von den mehreren Clients (8a-8d) relevant sind, auf der Basis des Verwendungsprofils des Clients;
- Senden der als für den Client relevant bestimmten aktuellen Informationen über das Kommunikationsnetz (6a, 6b) zum Client zu einem zumindest geeigneten Zeitpunkt, der durch den Agenten (10) bestimmt wird.

20. System nach Anspruch 19, wobei das Kommunikationsnetz (6a, 6b) einen ersten Netzteil mit einer begrenzten Bandbreite und einen zweiten Netzteil mit einer größeren Bandbreite umfasst, wobei der Agent (10) am Server (5) angeordnet ist, der den ersten Netzteil und den zweiten Netzteil miteinander verbindet, und der Client zur Verbindung mit dem ersten Netzteil in der Lage ist.

21. System nach Anspruch 20, wobei der erste Netzteil ein drahtloses Kommunikationsnetz ist.

22. System nach einem der Ansprüche 19 - 21, wobei der Agent (10) so beschaffen ist, dass er Zugriff auf eine Datenbank (12) hat, die Verwendungsprofile hinsichtlich relevanter Informationen, die durch den Benutzer der Vorrichtung (4) angegeben werden, und/oder Informationen, die dem Benutzer zugeordnet sind, und/oder Daten über die Vorrichtung (4), die den Client enthält, enthalten kann.

23. System nach Anspruch 22, wobei die Datenbank, die die Verwendungsprofile und/oder Daten der Vorrichtung, die den Client enthält, enthält, in einer solchen Weise angeordnet ist, dass die Profile und/oder Daten in der Datenbank durch Mittel einer weiteren Vorrichtung und/oder über ein weiteres Kommunikationsnetz erzeugt, modifiziert und/oder hinzugefügt werden können.

24. System nach einem der Ansprüche 19 - 23, wobei der Agent (10) ein Lernmodul enthält, das durch vom Client zugeführte Daten gesteuert wird.

25. System nach einem der Ansprüche 19 - 24, wobei der Client in einer Vorrichtung des Benutzers enthalten ist, die vom "immer eingeschalteten" Typ ist oder einen automatischen Antwortmodus aufweist.

26. Computerprogramm mit einem Codemittel zum, wenn das Computerprogramm auf einem Server läuft, Ausführen der Schritte des Verfahrens nach einem der Ansprüche 1-18.

27. Datenträger mit Daten, wobei mindestens ein Teil der Daten das Computerprogramm nach Anspruch 26 darstellt.

28. Kommunikationsnetz (6a, 6b) mit mindestens einem Server (5) und mehreren Clients, wobei sich am Server (5) eine Agentenfunktionalität (10) befindet, die zum Ausführen zumindest der folgenden Schritte beschaffen ist:
- Abrufen von aktuellen Informationen von mindestens einem weiteren Server (2), die für die mehreren Clients (8a-8d) relevant sind, durch Kombinieren der Verwendungsprofile der mehreren Clients (8a-8d), wobei das Verwendungsprofil eines Clients angibt, welche Informationen für einen Benutzer des Clients relevant sind;
- Speichern der aktuellen Informationen in einem Cache (11);
- Feststellen, welche der aktuellen Informationen für einen Client von den mehreren Clients (8a-8d) relevant sind, auf der Basis des Verwendungsprofils des Clients;
- Senden der aktuellen Informationen, die als für den Client relevant bestimmt werden, die nachstehend als relevante Informationen bezeichnet werden, über das Kommunikationsnetz (6a, 6b) zum Client zu einem zumindest geeigneten Zeitpunkt, der durch den Agenten (10) bestimmt wird.

29. Kommunikationsnetz nach Anspruch 28, wobei das Kommunikationsnetz (6a, 6b) einen ersten Netzteil mit einer begrenzten Bandbreite und einen zweiten Netzteil mit einer größeren Bandbreite umfasst, wobei der Agent (10) am Server (5) angeordnet ist, der den ersten Netzteil und den zweiten Netzteil miteinander verbindet, und der Client zur Verbindung mit dem ersten Netzteil in der Lage ist.

30. Kommunikationsnetz (6a, 6b) nach Anspruch 29, wobei der erste Netzteil ein drahtloses Kommunikationsnetz umfasst.

## Revendications

1. Procédé pour envoyer des informations sur un réseau de communication (6a, 6b) comprenant au moins un serveur (5) et plusieurs clients (8a-8d), le serveur (5) possédant une fonctionnalité d'agent (10), lequel procédé comprend les étapes suivantes :
- extraire avec l'agent (10), depuis au moins un autre serveur (2), des informations de mise à jour qui sont pertinentes pour lesdits plusieurs clients (8a-8b) en combinant les profils d'utilisation desdits plusieurs clients (8a-8b), le profil d'utilisation d'un client indiquant quelles informations sont pertinentes pour un utilisateur du client ;
- stocker les informations de mise à jour dans une cache (11) ;
- déterminer à l'aide de l'agent (10) quelles informations de mise à jour sont pertinentes pour un client parmi lesdits plusieurs clients (8a-8d) en fonction du profil d'utilisation du client ;
- envoyer au client, à l'aide de l'agent (10), les informations pertinentes sur le réseau de communication (6a, 6b) à au moins un moment approprié déterminé par l'agent (10).

2. Procédé selon la revendication 1, dans lequel les informations pertinentes comprennent au moins une page d'information et/ou des parties de la page d'informations définies par le profil d'utilisation.

3. Procédé selon la revendication 1, dans lequel le profil d'utilisation comprend également des données concernant un dispositif (4) qui comporte le client, et dans lequel l'agent (10) lors de l'envoi des informations pertinentes, envoie ces informations pertinentes au client du dispositif (4) de manière appropriée pour le dispositif (4).

4. Procédé selon les revendications 1 à 3, dans lequel le profil d'utilisation est généré via un dispositif (4) qui comprend le client.

5. Procédé selon la revendication 4, dans lequel le profil d'utilisation est créé, modifié et/ou ajouté via un dispositif autre que le dispositif (4) qui comprend le client et/ou via un autre réseau par le biais duquel un contact peut être établi avec l'agent (10).

6. Procédé selon l'une quelconque des revendications précédentes, dans lequel les informations pertinentes sont compressées avant d'être envoyées par le réseau de communication (6a, 6b).

7. Procédé selon la revendication 6, dans lequel l'agent (10) détermine si les informations pertinentes seront envoyées aux clients (8a-8d) par l'application de techniques de diffusion multiple.

8. Procédé selon l'une quelconque des revendications précédentes, dans lequel l'agent (10) utilise au moins un paramètre afin de déterminer quelle action doit être exécutée.

9. Procédé selon la revendication 8, dans lequel le paramètre indique la charge sur une partie au moins du réseau de communication (6a, 6b) tandis que l'agent (10) détermine en fonction du paramètre un moment approprié pour envoyer les informations pertinentes.

10. Procédé selon la revendication 9, dans lequel l'agent (10) indique quelles informations seront envoyées étant donné une certaine charge sur le réseau de communication (6a, 6b).

11. Procédé selon la revendication 10, dans lequel, dans le cas d'une charge élevée sur le réseau communication (6a, 6b), seules les informations vieillissant rapidement seront envoyées tandis que, dans le cas d'une charge faible sur le réseau de communication, les informations vieillissant plus lentement seront également envoyées.

12. Procédé selon la revendication 8, dans lequel le paramètre concerne un moment auquel le client extrait habituellement les informations pertinentes, tandis que l'agent (10) détermine en fonction de ce paramètre le moment approprié pour envoyer les informations pertinentes.

13. Procédé selon la revendication 12, dans lequel l'agent (10) indique quelles informations seront envoyées au client et à quel moment habituel.

14. Procédé selon la revendication 8, dans lequel le paramètre concerne un endroit où les informations pertinentes peuvent être importantes pour l'utilisateur tandis que l'agent (10) détermine, en fonction de ce paramètre, le moment approprié pour envoyer les informations pertinentes.

15. Procédé selon l'une quelconque des revendications 8 à 14, dans lequel l'agent (10), lors de l'envoi des informations sur le réseau de communication (6a, 6b), tient également compte des capacités du dispositif (4) de l'utilisateur du client concerné.

16. Procédé selon l'une quelconque des revendications précédentes, dans lequel l'agent (10) apprend le motif de comportement de l'utilisateur.

17. Procédé selon la revendication 16, dans lequel l'apprentissage du motif de comportement de l'utilisateur se fait parce que le client communique le comportement de l'utilisateur à l'agent (10).

18. Procédé selon l'une quelconque des revendications précédentes, dans lequel l'agent (10) ne lie pas les informations pertinentes pour le client avant que les informations pertinentes ne soient envoyées au client.

19. Système pour envoyer des informations sur un réseau de communication (6a, 6b), comprenant au moins :
- un serveur (5) comprenant une cache de serveur (11) ;
- plusieurs clients (8a-8d) ;
- une fonctionnalité d'agent (10) au niveau du serveur (5) qui est conçue pour :
- extraire, depuis au moins un autre serveur (2), des informations de mise à jour qui sont pertinentes pour lesdits plusieurs clients (8a-8b) en combinant les profils d'utilisation desdits plusieurs clients, le profil d'utilisation d'un client indiquant quelles informations sont pertinentes pour un utilisateur du client ;
- stocker les informations de mise à jour dans une cache (11) ;
- déterminer quelles informations de mise à jour sont pertinentes pour un client parmi lesdits plusieurs clients (8a-8d) en fonction du profil d'utilisation du client ;
- envoyer au client les informations de mise à jour qui ont été déterminées comme pertinentes pour le client sur le réseau de communication (6a, 6b) à au moins un moment approprié déterminé par l'agent (10).

20. Système selon la revendication 19, dans lequel le réseau de communication (6a, 6b) comprend une première partie de réseau avec une largeur de bande limitée et une seconde partie de réseau avec une largeur de bande plus importante, dans lequel l'agent (10) se situe au niveau du serveur (5) qui interconnecte la première partie de réseau et la seconde partie de réseau, tandis que le client est capable de se connecter à la première partie de réseau.

21. système selon la revendication 20, dans lequel la première partie de réseau est un réseau de communication sans fil.

22. Système selon l'une quelconque des revendications 19 à 21, dans lequel l'agent (10) est conçu pour avoir accès à une base de données (12) qui contient des profils d'utilisation concernant les informations pertinentes indiquées par l'utilisateur du dispositif (4) et/ou des informations associées à l'utilisateur et/ou des données concernant le dispositif (4) qui comprend le client.

23. Système selon la revendication 22, dans lequel la base de données contenant les profils d'utilisation et/ou les données du dispositif comprenant le client est conçue de sorte que les profils et/ou les données dans la base de données peuvent être créés, modifiés et/ou ajoutés par le biais d'un autre dispositif et/ou d'un autre réseau de communication.

24. Système selon l'une quelconque des revendications 19 à 23, dans lequel l'agent (10) comprend un module d'apprentissage commandé par les données fournies par le client.

25. Système selon l'une quelconque des revendications 19 à 24, dans lequel le client est compris dans un dispositif de l'utilisateur qui est du type « toujours en marche » ou qui possède un mode de réponse automatique.

26. Programme informatique comprenant un moyen de type code pour, lorsque le programme informatique tourne sur u serveur, exécuter les étapes du procédé selon l'une quelconque des revendications 1 à 18.

27. Support de données comprenant des données, dans lequel une partie au moins des données représente le programme informatique selon la revendication 26.

28. Réseau de communication (6a, 6b) comprenant au moins un serveur (5) et plusieurs clients, dans lequel, au niveau du serveur (5) se trouve une fonctionnalité d'agent (10) conçue pour :
- extraire, depuis au moins un autre serveur (2), des informations de mise à jour qui sont pertinentes pour lesdits plusieurs clients (8a-8b) en combinant les profils d'utilisation desdits plusieurs clients (8a-8b), le profil d'utilisation d'un client indiquant quelles informations sont pertinentes pour un utilisateur du client ;
- stocker les informations de mise à jour dans une cache (11) ;
- déterminer quelles informations de mise à jour sont pertinentes pour un client parmi lesdits plusieurs clients (8a-8d) en fonction du profil d'utilisation du client ;
- envoyer au client les informations de mise à jour qui ont été déterminées comme pertinentes pour le client, et ci-après dénommées informations pertinentes, sur le réseau de communication (6a, 6b) à au moins un moment approprié déterminé par l'agent (10).

29. Réseau de communication selon la revendication 28, lequel réseau de communication (6a, 6b) comprend une première partie de réseau avec une largeur de bande limitée et une seconde partie de réseau avec une largeur de bande plus importante, et dans lequel l'agent (10) se situe au niveau du serveur (5) qui interconnecte la première partie de réseau et la seconde partie de réseau, tandis que le client est capable de se connecter à la première partie de réseau.

30. Réseau de communication (6a, 6b) selon la revendication 29, dans lequel la première partie de réseau comprend un réseau de communication sans fil.
